# EUROPEAN PATENT APPLICATION

(11) **EP 1 533 553 A1**
(43) Date of publication of application: **25.05.2005**
(21) Application number: 04105180.6
(22) Date of filing: 20.10.2004
(51) Int. Cl.: F16L 1/09

(54) **Installing large-sized pipes with socket-and-spigot joint**

(30) Priority: 19.11.2003 FI 20031685
(71) Applicant: RAUTARUUKKI OYJ, 01531 Vantaa (FI)
(72) Inventor: Lindelä, Esko, 86300 Oulu (FI)
(74) Representative: Laako, Tero Jussi

(57) **Abstract**

The invention relates to a method for installing large-sized pipes with socket-and-spigot joint (1, 2) on the ground surface (M) or at the bottom (M) of a premade trench. In the method, a second socket-and-spigot joint pipe (2) is lowered in place, so that its socket element (20) is placed opposite to the reversed socket element (10) of an earlier first socket-and-spigot joint pipe (1); around the outer socket element (10) of the second socket-and-spigot joint pipe (2), there is installed a support transfer device (5); a construction machine or part of it, or a temporary support element is arranged in an immovable fashion against the ground surface or the bottom of the trench, or respectively planted in the ground at a distance (L1) from said support transfer device, to serve as a counterpart (30); the socket-and-spigot joint pipes are directed together; and the compression force assembly (6) of the support transfer device is allowed to be supported against said counterpart; and the compression force assembly is allowed to perform a thrust motion (F) that moves the second socket-and-spigot joint pipe (2) in the direction of the first socket-and-spigot joint pipe (1) for the length of a required transfer distance (L_{F}).

## Description

The invention relates to a method and equipment for installing large-sized pipes with socket-and-spigot joint on the ground surface or at the bottom of a premade trench, the first end of said socket-and-spigot joint pipes being a female socket-joint element and the second end being a male spigot-joint element. In said installation, a second socket-and-spigot joint pipe is first lowered on the ground surface or at the bottom of a trench, so that its male spigot-joint element or female socket-joint element is arranged opposite to the female socket-joint element or respectively male spigot-joint element of a previously lowered first socket-and-spigot joint pipe; then the socket element of the second socket-and-spigot joint pipe is directed towards the socket element of the first socket-and-spigot joint pipe, whereafter the male spigot-joint element is inserted in the female socket-joint element, or respectively the female socket-joint element is engaged around the male spigot-joint element. A support transfer device is used as an auxiliary aid.

Conventionally in this type of installation, the male spigot-joint element is made to penetrate into the female socket-joint element for example by hitting that end of the pipe to be installed, i.e. the second socket-and-spigot joint pipe, that has the female socket-joint element, by a excavator basket, in which case said pipe is shifted for the required length, and the male spigot-joint element is inserted in the female socket of a previous pipe, i.e. a first socket-and-spigot joint pipe. Among the drawbacks of this method, let us first of all point out that the length of the second socket-and-spigot joint pipe is difficult to arrange sufficiently precisely in parallel with the center line of the first socket-and-spigot joint pipe that was installed previously, and even the alignment of the previously installed pipe can be changed during the stroke or strokes, so that the socket-and-spigot joint elements that are forced to be engaged may be damaged. A second drawback is that a socket-and-spigot joint element that gets hit by the excavator basket is easily damaged during the impact. A third drawback is that when hitting or pressing the pipe by a excavator basket, the impact or compression force is difficult to regulate and control, which means that if the pipe is pressed at an excessive speed in the sealed socket, the sealing has no time to adjust, and it may be broken. As a consequence, the created socket-and-spigot joint is not liquid-proof. As an alternative, the installation can be carried out by drawing the second socket-and-spigot joint pipe either by a block pulley arranged through the second and first socket-and-spigot joint pipes or, which is the more general case, by two block pulleys arranged outside the pipe to be connected to the joint, in parallel with said pipe and placed on opposite sides thereof, which pulley or pulleys are supported against the end of the second socket-and-spigot joint pipe. By this arrangement, the damaging problems of the above-described method are avoided, but the fitting of the block pulley inside the socket-and-spigot joint pipes or respectively around the pipes, and their further shifting to successive socket-and-spigot joint pipes is troublesome and takes up time. According to the publication CH-462 557, through the whole length of the pipe sequence to be installed, there is brought a dragging wire. The wire is attached to a beam extending over the first end of the pipe sequence and to the shaft of a hydraulic cylinder, whereas the hydraulic cylinder itself is attached to an installation beam extending over the second end of the pipe sequence. Consequently, the block pulley or pulleys are here replaced by a hydraulic cylinder. It is particularly pointed out that the installation of large-sized and heavy socket-and-spigot joint pipes made of steel is not possible manually, as is the case with small-size plastic socket-and-spigot joint pipes.

The publication SU-1006645 describes another type of arrangement for mutually connecting pipes with socket-and-spigot joint. This arrangement includes a fork moving transversally with respect to the longitudinal direction of the pipes, which fork is placed behind the expansion of the female socket of the already installed pipe and pressed against the pipe, as well as a compression element that is placed at some point of the length of the second pipe to be installed and pressed against the straight outer surface of said second pipe. In addition, the fork and the compression element are interconnected by hydraulic cylinders, by means of which the compression element and hence the second socket-and-spigot joint pipe can be pulled towards the fork, so that the male spigot-joint element of the second socket-and-spigot joint pipe is inserted, in a controlled fashion, into the female socket-joint element of the first socket-and-spigot joint pipe. This kind of arrangement may perhaps help in avoiding the problems connected to the mutual alignment of the socket-and-spigot joint pipes, and it may be fairly rapid to use, but because the fork and especially the compression element must be pressed really tight against the outer surface of the pipe in order to avoid the sliding thereof, this easily results in damages on the outer pipe surface. As regards outer surface damages, they are extremely severe when the pipes are coated by a protective layer, such as corrosion protection, thermal insulation and/or a combination of these. For example a broken corrosion protection or thermal insulation must be repaired, which is extremely difficult in the open air, susceptible to the weather, and often impossible to realize with a sufficiently high quality.

The publication FR-2 259 946 describes a mechanism for installing a pipe array in a trench. This installation mechanism employs a tilting support groove or cradle, in which the pipe to be installed is placed, whereafter the cradle with the pipe is turned to horizontal position. Now the pipe to be installed rests in the stationary cradle, at the same time as it is pressed in the longitudinal direction for creating a socket-and-spigot joint. Said longitudinal pressing of the pipe to be installed is carried out by a ring supported against a socket groove located inside the female socket-joint element, the outer diameter of said ring being essentially the same as the outer diameter of the socket element. The longitudinal pressing of the pipe to be installed is then carried out by intermediation of a thrust cylinder, one end of which cylinder is supported against the above described ring, and the other end is supported against a curved intermediate plate extending over the trench. Said intermediate plate in turn is attached to two wall racks supporting the opposite sides of the trench, which racks extend, in the lengthwise direction of the pipes, from the front of the pipe to be installed to the rear of said pipe.

The publication DE-29 18 382 describes a fork-like installation device that is attached to a crane. The installation device is composed of for example two parallel vertical supports that are spaced apart, both of said vertical supports having support arms that can be placed against the outer pipe surface by actuators, as well as pulling means that can grip the pipe front surface for shifting the pipe in the longitudinal direction. The mutual distance of the vertical supports is adjusted by means of articulated shafts to be attached to said supports, to a distance keeper connecting them and to a control element fastened to a crane. The installation device and particularly the vertical supports, provided with the distance keepers and the articulated shafts, are located at the sides of the pipe to be installed, on both sides thereof and inside the pipe length. The pulling means constitute two hydraulic cylinders located outside the pipe to be installed, first ends of said pipes being attached to said vertical supports, and the second ends being provided with coupling hooks that are fastened around the edge of the socket element of the pipe. The order of installation is as follows: the pipe to be installed is lifted by the installation device, supported by its support arms, in place in the trench, the vertical supports of the installation device are left on two sides of the pipe to be installed, whereafter the coupling hooks are turned against the rear edge of the pipe, and the pipe is pulled by said two external cylinders in place, to form a continuation to the pipe that was installed previously.

Thus the object of the invention is to realize a method and equipment by which finished large-sized pipes with socket-and-spigot joint can be interconnected in the open air, in their final station, as rapidly as possible and without damaging any points of the pipes. In particular, the objects of the invention are related to the installation of large-sized steel pipes that are already protected by coating on the ground surface or more typically in a premade trench. A second object of the invention is to realize this kind of method and equipment that make it possible to precisely align interconnectable socket-and-spigot joint pipes with respect to each other and to maintain the created alignment during the making of the socket-and-spigot joint. Yet another object of the invention is to realize this type of method and equipment that is easy to use and economical in expenses.

The above-defined objects are attained by a method according to the invention, as defined in the characterizing parts of the claims 1 and 2, as well as by an equipment according to the invention, as defined in the characterizing part of claim 12.

Among the most important advantages of the invention, it is pointed out that the equipment used in the installation process is extremely simple and economical in price, that as auxiliary aids in the installation work, there can be used those construction machines, such as an excavator and a crane, that would in any case be available in the building site, that the installation of socket-and-spigot joint pipes is carried out extremely rapidly, and that the damaging of both the pipe coating and the socket-and-spigot joint elements is avoided.

The invention is described in more detail below with reference to the appended drawings.

Fig. 1 illustrates how a method according to the invention is used, i.e. a building site arrangement in general, seen in an axonometric view.

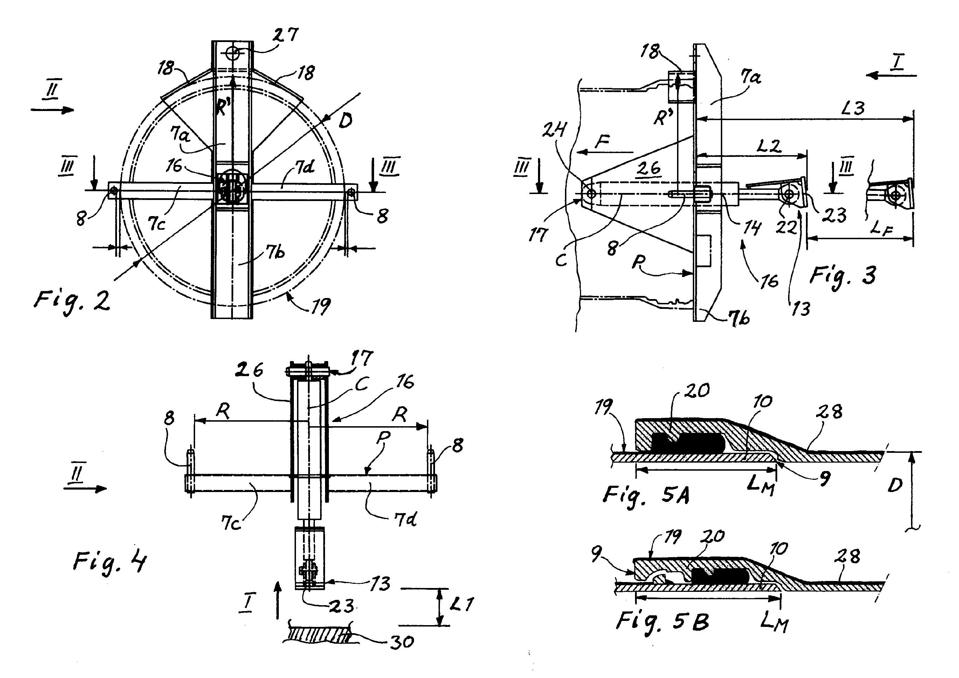

Fig. 2 illustrates the equipment used in the installation of pipes with socket-and-spigot joint according to the invention, as arranged on top of the female socket-joint element, in parallel with the center line of the socket-and-spigot joint pipe, seen from the direction I of figures 3 and 4.

Fig. 3 illustrates the equipment of figure 2, arranged on top of the female socket-joint element and seen from the side, from the direction II of figures 2 and 4.

Fig. 4 illustrates the equipment of figures 2 and 3 as a horizontal section seen from above, along the plane III-III of figures 2 and 3.

Fig. 5A and 5B illustrate examples of two different socket-and-spigot joints that can be used in large-sized socket pipes, in coated steel pipes, seen as longitudinal sections at one point in the circumference of the pipes.

Large-sized pipes 1, 2 with socket-and-spigot joint, with a diameter of at least 500 mm, where the first end 11 of the socket-and-spigot joint pipes has a female socket-joint element 10 and the second end 12 has a male spigot-joint element 20, are installed on the ground surface M or at the bottom M of a premade trench. Here the term socket-and-spigot joint pipes 1, 2 refers to both straight and curved pipes as well as to branchings, i.e. branched pipe sections. Thus the socket-and-spigot joint pipes can represent any of these types, in any kinds of combinations installed in succession; the same method and equipment according to the invention is used in their installation. On a general level, in the installation method of these large-sized socket-and-spigot joint pipes, first a second socket-and-spigot joint pipe 2 is lowered on the ground surface or at the bottom of a trench, so that its male spigot-joint element 20 is placed opposite to the female socket-joint element 10 of a first socket-and-spigot joint pipe 1 previously lowered on the ground surface or at the bottom of a trench, or the pipes can be in reversed positions, in which case the second socket-and-spigot joint pipe 2 is lowered on the ground surface or at the bottom of a trench, so that its female socket-joint element 10 is placed opposite to the male spigot-joint element 20 of the first socket-and-spigot joint pipe 1 previously lowered on the ground surface or at the bottom of a trench. Next the male spigot-joint element of the second socket-and-spigot joint pipe is directed towards the female socket-joint element of the first socket-and-spigot joint pipe, or if the pipes are in the described reversed positions, the female socket-joint element of the second socket-and-spigot joint pipe is directed towards the male spigot-joint element of the first socket-and-spigot joint pipe. In the end, said male spigot-joint element is pushed to be inserted in said female socket-joint element, or in case the pipes are arranged in the above described reversed positions, said female socket-joint element is pushed to be engaged around said male spigot-joint element. Naturally in a real work operation a large number of socket-and-spigot joint pipes are arranged in succession, but all pipe joints in the pipeline are made in similar fashion as is here described with reference to two socket-and-spigot joint pipes. Generally it is advantageous to dig, prior to the installation of a support transfer device 5 according to the invention, earth from underneath the female socket-joint element 10 of the second socket-and-spigot joint pipe 2, either at the ground surface M or at the bottom M of the trench, to the extent that said female socket-joint element of the socket-and-spigot joint pipe to be installed is not supported against the ground. This helps to maintain the alignment of the pipes and reduces the force required for thrusting the second socket-and-spigot joint pipe. Before transporting this type of socket-and-spigot joint pipes to the installation site, their outer surfaces are typically provided with a coating 28, which may be composed of for instance an epoxy layer, an adhesive film and a polyethylene layer, or some other kind of coating, which coating protects the pipe against corrosion and may also serve as an insulation against heat or cold.

According to the invention, after the second socket-and-spigot joint pipe is in the above described fashion lowered on the ground surface M or at the bottom M of a trench and arranged at least roughly in line with the first socket-and-spigot joint pipe 1, with the respective socket and spigot elements 10 and 20 placed opposite to each other, around the female socket-joint element 10 or in the reversed alternative the male spigot-joint element 20 of the second socket-and-spigot joint pipe 2 there is arranged a support transfer device 5 comprising a centrally located and telescoping L2 → L3 compression force assembly 6. The second socket-and-spigot joint pipe is at least for the major part installed against the ground surface M or the trench bottom M in order to make the socket-and-spigot joint that is carried out next. Possible support pieces 39 support the socket-and-spigot joint pipe only locally. The extension L3 - L2 of the compression force assembly 6 is constructed to be at least as large or generally larger than the grip length L_{M} of the socket-and-spigot joint plus the possible distance G1 left between the male or female joint element of the second socket-and-spigot joint pipe 2 and the female or respectively male joint element of the first socket-and-spigot joint pipe 1, in other words (L3 - L2) ≧ (L_{M} + G1), or (L3 - L2) > (L_{M} + G1) where the longest length of the compression force assembly is L3 and the shortest length is L2. Said distance G1 is created when lowering the second socket-and-spigot joint pipe on the ground surface or at the bottom of a trench, because in practice its socket element 10 or 20 cannot be in immediate contact with the opposite socket element 20 or 10 of the first socket-and-spigot joint pipe, although the distance G1 should be kept as short as possible. The support transfer device 5 is brought around the female socket-joint element 10 or male spigot-joint element 20 of the second socket-and-spigot joint pipe 2, in parallel with the center line L_{L} of said second socket-and-spigot joint pipe, to be supported against the outwardly pointing front surface 9 of the female socket-joint or respectively the male spigot-joint. At the same time the protruding guide pins 8 and/or guide plates 18 provided in the support transfer device 5 are arranged particularly at the sides and on top of the outside of the female 10 or male spigot-joint element 20 of the second socket-and-spigot joint pipe 2, without pressure. In practice there is left a small clearance G2 in between the outside or outer surface of the female socket-joint element 10 or the male spigot-joint element 20 and the guide pins 8 and/or guide plates 18, which clearance is at least 1% but no more than 9% of the outer diameter D of the second socket-and-spigot joint pipes 2 to be installed, or preferably within the range 2% - 4% of the outer diameter D of the second socket-and-spigot joint pipes to be installed.

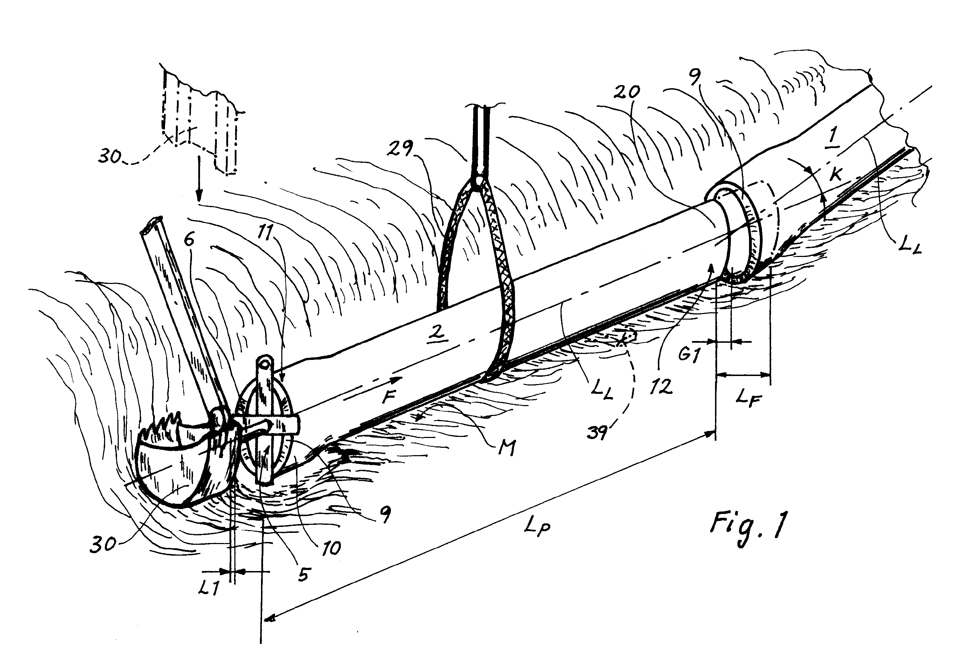

Next there is either arranged a construction machine or part thereof immovably against the ground surface M or the trench bottom M and at the distance L1 from said support transfer device, to serve as a counterpart 30, or alternatively a temporary support element is planted in the ground, at the distance L 1 from said support transfer device, to serve as the counterpart 30. The construction machine can represent any type of earthmoving machinery, as long as it is provided with a bulldozer blade or excavator basket or the like, suited to be used as the counterpart 30, which is lifted or driven away after the mutual engagement for the socket-and-spigot joint between the second socket-and-spigot joint pipe 2 and the first socket-and-spigot joint pipe 1 is made in the way to be described below. Figure 1 illustrates primarily an embodiment where an excavator basket is used as the counterpart. In this case, the counterpart is made even more solid if the spikes of the basket or the like are plunged in the ground. The above mentioned support element can be for example a steel sheet pile, concrete pile, steel pipe pile etc. that is generally known and widely used in earthmoving operations, which support element is lifted away after the mutual engagement for the socket-and-spigot joint between the second socket-and-spigot joint pipe 2 and the first socket-and-spigot joint pipe 1 is made in the way to be described below. A dotted line in figure 1 illustrates a steel sheet pile suitable to be used as a counterpart and its plunging direction, by way of example, not installed in place. Irrespective of which of the above described types the counterpart 30 represents, i.e. whether it is part of movable construction machinery or one single bar-like or pile-like element, it does not, however, support the second socket-and-spigot joint pipe, at least not when serving as the counterpart. The counterpart is a structure completely separate from the support transfer device 5, and they are not in any way mutually integrated. Thus the counterpart is non-supportive of the pipe and independent of the support transfer device. The counterpart 30 is arranged in place separately for each second socket-and-spigot joint pipe to be installed, and it is removed after the installation of each second socket-and-spigot joint pipe, i.e. after making a socket-and-spigot joint. Further, said counterpart is arranged in a location where said distance L1 parallel both with the second socket-and-spigot joint pipe and with the center line C of the support transfer device 5 extends outwards from the second socket-and-spigot joint pipe 2, i.e. is located on the extension of the center line L_{L} of the second socket-and-spigot joint pipe, in which case it is placed outside the length L_{P} of the pipe. The distance L1 of the counterpart 30 from the support transfer device 5, more precisely its distance from the outer end 13, such as a support plate 23, of its compression force assembly 6, is arranged to be as short as possible. Said distance L1 and the above described distance G1 together must be kept as small as possible, and in any case it is necessary to take care during the installation process that their sum together with the grip length L_{M} of the socket-and-spigot joint is at the most as large as the extension L3 - L2 of the compression force assembly 6, i.e. (L_{M} + L1 + G1) ≦ (L3 - L2). It is pointed out that in this step, when arranging the counterpart 30 in place, the compression force assembly 6 naturally has its shortest length L2.

When necessary, the first end 11 on the side of the female socket-joint element 10 of the second socket-and-spigot joint pipe 2, or in the reversed alternative respectively the second end 12 on the side of the male spigot-joint element 20, is shifted by means of a crane attached to the support transfer device 5, so that said second socket-and-spigot joint pipe 2 is in line with said first socket-and-spigot joint pipe 1 at an accuracy where the deviation angle K between their center lines L_{L} is no more than 3° or preferably no more than 2°. At the same time, in between the second socket-and-spigot joint pipe 2 to be installed and the ground surface or trench bottom, there can be placed single support pieces 39, such as plank timber pieces etc., marked by dotted lines in figure 1, for reducing the dynamic friction of the pipe during the next step, in addition to which the second socket-and-spigot joint pipe is vertically aligned with respect to the first socket-and-spigot joint pipe. As another alternative, it is possible to pass a support rope 29 around the center part of the second socket-and-spigot joint pipe 2, by which rope the pipe can be supported in the next step. As is understandable, the dimensions of both the individual support pieces 39 and the support rope 29 represent only a fraction of the pipe length L_{P}, which means that they do not create any kind of support groove for the pipe to be installed. Hence the assembly equipment according to the invention does not include a support groove even as a separate tool. Likewise it is understandable that the support pieces and the support ropes are elements independent of the support transfer device 5 and the counterpart 30. In any case, the support piece or elements 39 and support rope or ropes 29 are made of a material that does not damage the possible coating 28 of the pipe.

In the next step, the compression force assembly 6 is allowed to rest against the above described counterpart 30, and finally the compression force assembly 6 is allowed to perform a thrust motion F, so that it is extended towards its largest length L3, which thrust motion moves the second socket-and-spigot joint pipe 2 towards the first socket-and-spigot joint pipe 1 for the length of a transfer distance L_{F} in parallel with the center lines L_{L} of the socket-and-spigot joint pipes and either makes the male spigot-joint element 20 of the second socket-and-spigot joint pipe to be engaged inside the female socket-joint element 10 of the first socket-and-spigot joint pipe, or in the reversed alternative it makes the female socket-joint element 10 of the second socket-and-spigot joint pipe to be engaged around the male spigot-joint element 20 of the first socket-and-spigot joint pipe. Now the mutual socket-and-spigot joint between these socket-and-spigot joint pipes is completed. During the thrust motion F performed by the compression force assembly 6, the second socket-and-spigot joint pipe 2 to be installed is either supported by the crane in the center region of the pipe by said support rope 29 for reducing dynamic friction, or dynamic friction is reduced by above described support pieces arranged between the second socket-and-spigot joint pipe 2 to be installed and the ground surface or trench bottom.

After the male spigot-joint element 20 has been engaged into the female socket-joint element 10, or in case the pipes are in said reversed positions, the female socket-joint element 10 is engaged onto the male spigot-joint element 20, i.e. the socket-and-spigot joint is complete at least for this part, the temporary support element that served as the counterpart 30 is pulled off the ground, or the construction machine that served as the counterpart 30 is lifted off the ground or pulled off the trench bottom, and the next second socket-and-spigot joint pipe is arranged in the new place required by the installation process. The above-described steps are repeated for the next second socket-and-spigot joint pipe 2.

An assembly equipment according to the invention, used for installing large-sized socket-and-spigot joint pipes 1, 2 on the ground surface M or at the bottom of a premade trench M includes in the support transfer device 5 first of all at least four crosswise and immovably connected frame beams 7a, 7b, 7c, 7d, which form a contact plane P and have a center line C perpendicular to said contact plane, and secondly at least three of said frame beams are provided with guide pins 8 and/or guide plates 18, which protrude from the contact plane P in the direction of the center line and are located, with respect to the center line C, at the distance of the radii R corresponding to the outer diameter D of the female socket-joint element 10 of the socket-and-spigot joint pipes 1, 2 or, when the pipes are in said reversed positions, at the distance of the radii R corresponding to the outer diameter D of the male spigot-joint element 20 of the socket-and-spigot joint pipes 1, 2 to be installed, and thirdly, a compression force assembly 6.

The compression force assembly includes a telescoping element 16 including an inner end 17 attached to the frame beams in the area of the center line C, and an outer end 13 pointing in the opposite direction with respect to said guide pins 8 and guide plates 18. This outer end 13 is provided with an articulated 22 support plate 23, which in operation, i.e. when pressing the second socket-and-spigot joint pipe 2 around or inside the first socket-and-spigot joint pipe 1, is supported against the above described counterpart 30. In addition, the compression force assembly includes power means 14 for adjusting the shortest length L2 of the telescoping element towards its largest length L3, which is larger than the grip length L_{M} of the socket-and-spigot joint. The telescoping element 16 can simultaneously be power means 14, for instance when the compression force assembly 6 is a hydraulic cylinder or a pneumatic cylinder, or the power means 14 can be an electric motor for actuating a spiral or tooth bar serving as the telescoping element 16.

A preferred embodiment of the support transfer device 5 also includes a fastening element 26 protruding in the direction of the guide pins and guide plates and attached rigidly to the frame beams 7a, 7b, 7c, 7d, to which fastening element 26 the inner end 17 of the compression force assembly 6 is attached by articulations 24 or rigidly in the area of the center line C. Thus the point of momentum that is located at the articulation 24 or at a corresponding rigid fastening is obtained inside the socket-and-spigot joint pipe, to enhance an even contact of the contact plane P against the front surface 9 of the socket-and-spigot joint pipes.

The guide pins 8 are placed at the distance of such radii R from the center line C, that between the guide pins and the outer surface 19 of the female socket-joint element 10 or male spigot-joint element 20 of the socket-and-spigot joint pipes to be installed there is left a predetermined clearance G2, which is at least 1% but no more than 9% of the outer diameter D of the socket-and-spigot joint pipes to be installed, or within the range 2% - 4% of the outer diameter D of the socket-and-spigot joint pipes to be installed. Two of the guide pins 8 are located at the radii R that are opposite with respect to the center line C, i.e. at radii that are extensions of each other, in the horizontal frame beams 7c and 7d. The guide plates 18, which together form a downwardly opening angle combination, are located on two sides of the radius R' that is perpendicular to the combination of the mentioned radii, in an upwardly pointing frame beam 7a. It also is possible to provide the fourth, downwardly oriented frame beam 7b with a guide pin or a guide plate. Thus the guide pins 8 and guide plates 18 keep the support transfer device 5 in place against said end of the socket-and-spigot joint pipe without damaging the outer surface 19 of the pipes or the front surface 9, and they may also guide the second socket-and-spigot joint pipe to maintain the parallel direction of the center lines L_{L} of said second socket-and-spigot joint pipe and the first socket-and-spigot joint pipe, because the center line C of the support transfer device is arranged at least roughly at the center lines L_{L} of the socket-and-spigot joint pipes and in line therewith. The guide pins 8 and/or guide plates 18 can be either stationary in the frame beams, or they can be adjusted along the frame beams in parallel with the radii R prior to starting the installation process, at locations where they create said clearance G2. This can be practical if the socket-and-spigot joint pipes must in the building site be installed in different orders, i.e. both with the female socket-joint element first and with the male spigot-joint element first, as was described above. It also is possible to install the socket-and-spigot joint pipes both ways, both with the female socket-joint element first and with the male spigot-joint element first, in the way described above, by using one and the same support transfer device 5, where the guide pins and guide plates remain in their permanent positions at the distance of the radius R from the center line.

Typically at least one of said frame beams 7a, 7b, 7c, 7d is provided with a fastening loop 27 for shifting the support transfer device and the socket-and-spigot joint pipe guided thereby in the sideways direction.

## Claims

1. A method for installing large-sized pipes (1, 2) with socket-and-spigot joint on a ground surface (M) or at a bottom (M) of a premade trench, a first end (11) of said socket-and-spigot joint pipes being provided with a female socket-joint element (10) and a second end (12) being provided with a male spigot-joint element (20), the method comprising steps for installation of each socket-and-spigot joint pipe:
- lowering a second socket-and-spigot joint pipe (2) on the ground surface or at the bottom of a trench, so that its male spigot-joint element (20) is placed opposite to the female socket-joint element (10) of a first socket-and-spigot joint pipe (1) lowered previously on the ground surface or at the bottom of the trench;
- aligning the male spigot-joint element of the second socket-and-spigot joint pipe to the female socket-joint element of the first socket-and-spigot joint pipe; and
- pushing said male spigot-joint element in said female socket-joint element,
**characterized in that** the method further comprises as steps:
- arranging a support transfer device (5) comprising a centrally located, telescoping (L2 → L3) compression force assembly (6) around the female socket-joint element (10) of the second socket-and-spigot joint pipe (2);
- arranging a construction machine or part thereof immobilized against the ground surface or the bottom of the trench and at a distance (L1) from said support transfer device, to serve as a counterpart (30), or planting a temporary support element into the ground at a distance (L1) from said support transfer device, to serve as a counterpart (30), said distance being located on a center line (L_{L}) extension of the second socket-and-spigot joint pipe;
- allowing the compression force assembly (6) to rest against said counterpart (30);
- allowing the compression force assembly (6) to perform a thrust motion (F) that moves the second socket-and-spigot joint pipe (2) towards the first socket-and-spigot joint pipe (1) over a transfer distance (L_{F}), which transfers the male spigot-joint element (20) of the second socket-and-spigot joint pipe to be engaged inside the female socket-joint element (10) of the first socket-and-spigot joint pipe; and
- lifting or driving the counterpart (30) away after said mutual jointing engagement between the second socket-and-spigot joint pipe and first socket-and-spigot joint pipe is made.

2. A method for installing large-sized pipes (1, 2) with socket-and-spigot joint on a ground surface (M) or at a bottom (M) of a premade trench, a first end (11) of said socket-and-spigot joint pipes being provided with a female socket-joint element (10), and a second end (12) being provided with a male spigot-joint element (20), the method comprising steps for installation of each socket-and-spigot joint pipe:
- lowering a second socket-and-spigot joint pipe (2) on the ground surface or at the bottom of a trench, so that its female socket-joint element (10) is placed opposite to the male spigot-joint element (20) of a first socket-and-spigot joint pipe (1) lowered previously on the ground surface or at the bottom of the trench;
- aligning the female socket-joint element of the second socket-and-spigot joint pipe to the male spigot-joint element of the first socket-and-spigot joint pipe; and
- pushing said female socket-joint element on said male spigot-joint element;
**characterized in that** the method further comprises as steps:
- arranging a support transfer device (5) comprising a centrally located, telescoping (L2 → L3) compression force assembly (6) around the male spigot-joint element (20) of the second socket-and-spigot joint pipe (2);
- arranging a construction machine or part thereof immobilized against the ground surface or the bottom of the trench and at a distance (L1) from said support transfer device, to serve as a counterpart (30), or planting a temporary support element into the ground, at a distance (L1) from said support transfer device, to serve as a counterpart (30), said distance being located on a center line (L_{L}) extension of the second socket-and-spigot joint pipe;
- allowing the compression force assembly (6) to rest against said counterpart (30);
- allowing the compression force assembly (6) to perform a thrust motion (F) that moves the second socket-and-spigot joint pipe (2) towards the first socket-and-spigot joint pipe (1) over a transfer distance (L_{F}), which transfers the female socket-joint element (10) of the second socket-and-spigot joint pipe to be engaged around the male spigot-joint element (10) of the first socket-and-spigot joint pipe; and
- lifting or driving the counterpart (30) away after said mutual jointing engagement between the second socket-and-spigot joint pipe and the first socket-and-spigot joint pipe is made.

3. A method according to claim 1 or 2, **characterized in that** said employed counterpart (30) is a bulldozer blade or excavator basket.

4. A method according to claim 1 or 2, **characterized in that** the largest extension (L3 - L2) of the compression force assembly (6) is provided to be at least as long as a grip length (L_{M}) of the socket-and-spigot joint and a possible distance (G1) between said male or female joint element of the second socket-and-spigot joint pipe (2) and the male or respectively female joint element of the first socket-and-spigot joint pipe (1) added together (L_{M} + G1), which distance is created when the second socket-and-spigot joint pipe is lowered on the ground surface or on the bottom of the trench.

5. A method according to claim 1 or 2 or 3, **characterized in that** said distance (L1) is arranged to be as short as possible.

6. A method according to any of the preceding claims, **characterized in that** protruding guide pins (8) and/or guide plates (18) provided in the support transfer device (5) are positioned at the sides and on top of the outside of the female socket-joint element (10) or male spigot-joint element (20) of the second socket-and-spigot joint pipe (2) without compression.

7. A method according to any of the preceding claims, **characterized in that** the support transfer device (5) is brought around the female socket-joint element (10) or male spigot-joint element (20) of the second socket-and-spigot joint pipe (2) in the direction of the center line (L_{L}) of said second socket-and-spigot joint pipe, to be supported against the outwardly pointing front surface (9) of the female socket-joint element or the male spigot-joint element respectively.

8. A method according to any of the preceding claims, **characterized in that** it further comprises a step where, when necessary, the first end of the second socket-and-spigot joint pipe (2) that is located towards the female socket-joint element (10) or respectively the second end that is located towards the male spigot-joint element (20) is shifted by a crane attached to the support transfer device (5), so that said second socket-and-spigot joint pipe is in line, with a deviation angle (K) not larger than 3°, with said first socket-and-spigot joint pipe.

9. A method according to any of the preceding claims, **characterized in that** it further comprises, prior to the installation of the support transfer device (5), a step where from under the female socket-joint element (10), either from the ground surface or from the bottom of the trench, there is dug sufficiently earth in order to prevent said female socket-joint element of the socket-and-spigot joint pipe to be installed from being supported against the ground.

10. A method according to any of the preceding claims, **characterized in that** it further comprises, during the thrust motion (F) performed by the compression force assembly (6), a step where:
- supporting the second socket-and-spigot joint pipe (2) to be installed by a crane in the middle region; or
- placing support pieces between the second socket-and-spigot joint pipe (2) to be installed and the ground surface or the bottom of the trench.

11. A method according to any of the preceding claims, **characterized in that** said socket-and-spigot joint pipes (1, 2) are either straight or curved or branching.

12. Assembly equipment without a support groove to be used when installing large-sized pipes (1, 2) with socket-and-spigot joint on the ground surface (M) or at the bottom (M) of a premade trench, first end (11) of said socket-and-spigot joint pipes being provided with a female socket-joint element (10), and second end (12) being provided with a male spigot-joint element (20), said assembly equipment comprising a support transfer device to be placed against the end sections of the socket-and-spigot joint pipe, **characterized in that** said support transfer device (5) comprises:
- at least four crosswise arranged frame beams (7a, 7b, 7c, 7d) immovably fastened together and forming a contact plane (P), and having a center line (C) that is perpendicular to said contact plane;
- at least in three of said frame beams guide pins (8) and/or guide plates (18) that protrude from the contact plane (P) in the direction of said center line and are located, with respect to the center line (C), at the distance of radii (R) corresponding to the outer diameter (D) of the female socket-joint element (10) or male spigot-joint element (20) of the socket-and-spigot joint pipes (1, 2) to be installed;
- a compression force assembly (6) comprising: a telescoping element (16) having an inner end (17) attached to the frame beams in the area of the center line (C), and an outer end (13) that points in a direction opposite to that of said guide pins and guide plates and that is adapted to rest by compression against a counterpart (30) that is separate from and located at a distance (L1) parallel with the center line (C) from said support transfer device; as well as power means (14) for changing the shortest length (L2) of the telescoping element towards its largest length (L3).

13. Assembly equipment without support groove according to claim 12, **characterized in that** said compression force assembly (6) is a hydraulic cylinder or a pneumatic cylinder or a spiral or tooth bar actuated by an electric motor.

14. Assembly equipment without support groove according to claim 12 or 13,
**characterized in that** the outer end of the compression force assembly (6) is provided with an articulated (22) support plate (23).

15. Assembly equipment without support groove according to claim 12 or 13 or 14, **characterized in that** the support transfer device also comprises a fastening element (26) protruding in the direction of said guide pins and guide plates and attached rigidly to the frame beams (7a, 7b, 7c, 7d), to which fastening element (26) the inner end (17) of the compression force assembly (6) is attached by articulations (24) or rigidly in the area of said center line.

16. Assembly equipment without support groove according to claim 12, **characterized in that** the guide pins (8) are placed at the distance of such radii (R) from the center line (C) that between the guide pins and the outer surface (19) of the female socket-joint element (10) or male spigot-joint element (20) of the socket-and-spigot joint pipes to be installed, there is left a predetermined clearance (G2).

17. Assembly equipment without support groove according to claim 16, **characterized in that** said clearance (G2) is at least 1% and at maximum 9% of the outer diameter (D) of the second socket-and-spigot joint pipes (2) to be installed, or within the range 2% - 4% of the outer diameter (D) of the second socket-and-spigot joint pipes to be installed.

18. Assembly equipment without support groove according to claim 16 or 17,
**characterized in that** the guide pins (8) and/or guide plates (18) are either permanent fixtures of the frame beams, or they are adjustable along the frame beams in parallel with the radii (R) prior to starting the installation, at points where they create said clearance (G2).

19. Assembly equipment without support groove according to any of the claims 12 - 18, **characterized in that** at least one of said frame beams (7a, 7b, 7c, 7d) is provided with a fastening loop (27) for transversally moving the support transfer device and the end of the socket-and-spigot joint pipe guided thereby.

20. Assembly equipment without support groove according to any of the preceding claims 12 - 19, **characterized in that** the longest extension (L3 - L2) of the telescoping element (16) in the compression force assembly is larger than the grip length (L_{M}) of the socket-and-spigot joint.

21. Assembly equipment without support groove according to any of the claims 12 - 20, **characterized in that** two of said guide pins (8) are located at the two radii (R) that are opposite with respect to the center line (C), and that the guide plates (18) forming an angle combination are located on both sides of the radius (R) that is perpendicular to the combination of said two radii.

22. Assembly equipment without support groove according to any of the claims 12 - 21, **characterized in that** it further comprises single support pieces (39) placed underneath the socket-and-spigot joint pipe (2) to be currently installed, or a support rope (29) arranged around the socket-and-spigot joint pipe (2) to be currently installed.

23. Assembly equipment without support groove according to any of the claims 12 - 22, **characterized in that** it further comprises a temporary counterpart (30) located at said distance (L1), which temporary counterpart can be moved in a way independent of the support transfer device (5).
